Europäisches Patentamt

European Patent Office

Office européen des brevets

(19)

(11) Veröffentlichungsnummer: **0 333 065 B1**

(12) **EUROPÄISCHE PATENTSCHRIFT**

(45) Veröffentlichungstag der Patentschrift:
21.11.91 Patentblatt 91/47

(51) Int. Cl.⁵: **A01F 15/10**

(21) Anmeldenummer: **89104283.0**

(22) Anmeldetag: **10.03.89**

(54) **Ballenpresse.**

(30) Priorität: **18.03.88 DE 3809131**

(43) Veröffentlichungstag der Anmeldung:
**20.09.89 Patentblatt 89/38**

(45) Bekanntmachung des Hinweises auf die
Patenterteilung:
**21.11.91 Patentblatt 91/47**

(84) Benannte Vertragsstaaten:
**BE FR GB IT NL**

(56) Entgegenhaltungen:
**DE-A- 3 407 682**
**US-A- 2 355 645**
**US-A- 3 379 123**
**US-A- 3 552 307**

(73) Patentinhaber: **Karl Mengele & Söhne,**
**Maschinenfabriken GmbH & Co.**
**Augsburger Strasse 50**
**W-8870 Günzburg (DE)**

(72) Erfinder: **Beck, Gerhard**
**Buchenweg 5**
**W-8876 Jettingen-Scheppach (DE)**

(74) Vertreter: **Kahler, Kurt, Dipl.-Ing.**
**Patentanwälte Kahler & Käck Gerberstrasse 3**
**Postfach 1249**
**W-8948 Mindelheim (DE)**

**Beschreibung**

Die Erfindung betrifft eine Ballenpresse für landwirtschaftliches Erntegut nach den oberbegrifflichen Merkmalen des Patentanspruchs 1.

Eine derartige Ballenpresse ist beispielsweise aus der DE-B-1212765 bekannt, wobei die Schneideinrichtung in Form einer Messerklinge am Preßkolben befestigt und mit diesem beim Preßhub im Preßkanal bewegbar ist. Eine solche, über die vordere Preßplatte des Preßkolbens hinausstehende Schneide weist den Nachteil auf, daß sich beim Zuführen des Erntegutes in den Preßkanal Erntegut daran verfängt bzw. bei weiter zurückgezogenem Preßkolben das bereits etwas vorverdichtete Futter wieder ausdehnt. Bei der bekannten Ballenpresse ist diese Vorverdichtung durch die seitlichen Zuführraffer relativ gering, so daß auch die Rückfederung des Erntegutes gering ist. Bei neueren Ballenpressen mit Längsflußprinzip ist man jedoch bestrebt, eine möglichst hohe Vorverdichtung zu erreichen, so daß eine vorstehen Schneide bzw. eine gegenüber dem Zuführschacht zurückstehende Preßplatte zur Vermeidung einer Rückfederung und damit Verdichtungsverringerung möglichst vermieden werden sollte. Zudem ist bei höheren Verdichtungsgraden eine saubere Schnittkante der jeweils eingeführten Ballenschicht mit geringfügig vorstehenden Schneiden kaum erreichbar, so daß die obenbeschriebenen Behinderungen des Erntegutflußes bzw. Auflösung der Vorverdichtung bei für sauberen Schnitt nötigen, gegenüber der Preßplatte weiterherausragenden Schneiden noch verstärkt werden. Demzufolge liegt der Erfindung die Aufgabe zugrunde, eine Ballenpresse zu schaffen, die zugleich ungehinderten Gutfluß, Erhaltung der Vorverdichtung und saubere Schnittkanten erreicht.

Diese Aufgabe wird durch die kennzeichnenden Merkmale des Anspruchs 1 gelöst.

Durch die zeitliche Voreilung der Schneidvorrichtung gegenüber dem Preßkolben wird ein sauberer Trennschnitt der eingeführten Preßschicht erreicht, damit ein Rupfen oder Herausreißen bei gleichzeitigem Pressen vermieden wird.

Nach dem zumindest teilweisen Abschneiden der Erntegutschicht setzt erst der Preßhub mit dem Nachhintenschieben der Erntegutschichten ein, so daß sowohl die Unterseiten- und Oberseiten des Gesamtballens eine glatte Oberfläche aufweisen. Dabei dient die Messeroberseite zugleich als Trennvorrichtung von dem nachschiebenden, vorverdichteten Erntegutstrang und als überschiebe Plattform für den abgetrennten Schichtabschnitt, so daß das beim Stand der Technik beschriebene Mitziehen nichtgeschnittenen Preßgutes sicher vermieden wird. Nach dem Preßhub ist die Preßplatte des Preßkolbens flächenbündig in Fortsetzung des Zuführschachtes ausgerichtet, wobei die Schneidvorrichtung nicht in den Einschubkanal hervorragt, so daß ein glattflächiger, übergangsloser Gutfluß bei Aufrechterhaltung der Vorverdichtung erreicht wird.

Vorteilhafte Ausgestaltungen wie die vom Preßkolben unabhängig antreibbare Schneidvorrichtung z.B. oszillierende Messerklinge (n) oder die mit Betätigung des Preßkolbens zugleich vorgeschobene Messerklinge mit Langlochführung ermöglichen höchste Schnittqualität bzw. sehr einfachen Aufbau und Antrieb.

Anhand zweier Ausführungsbeispiele wird die erfindungsgemäße Ballenpresse nachfolgend beschrieben
Es zeigen :

Fig. 1      eine Seitenansicht einer Ballenpresse
Fig. 2      eine vergrößerte Darstellung gemäß Fig. 1 mit der zweiten Ausführung der Schneidvorrichtung
Fig. 3      eine frontale Ansicht auf den Preßkolben der Ballenpresse

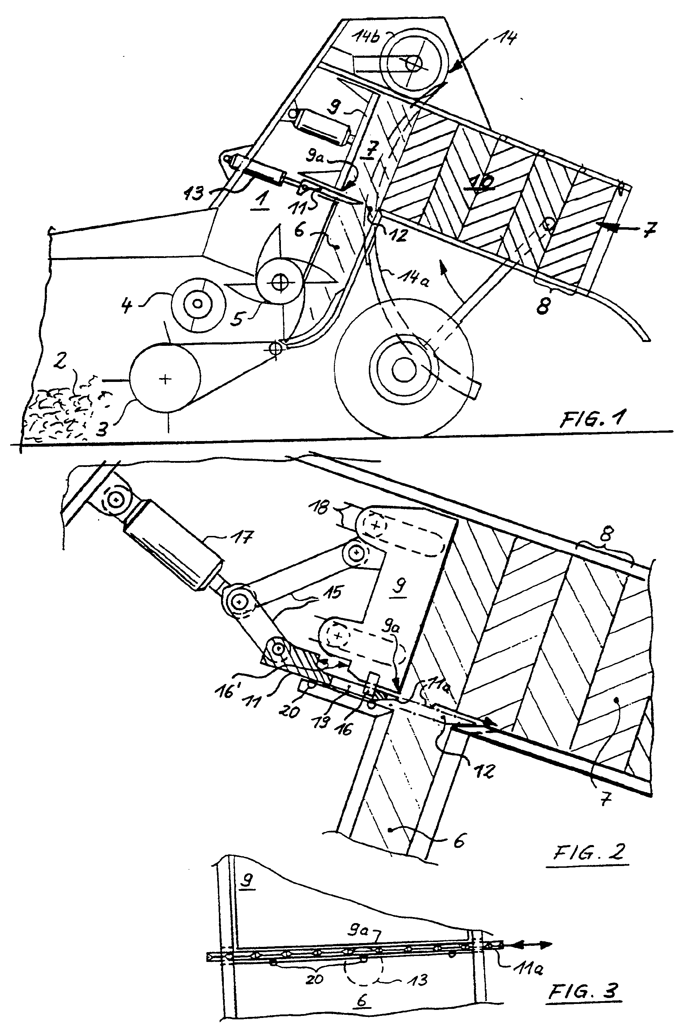

In Fig. 1 ist eine Ballenpresse (1) dargestellt, die Erntegut (2) über eine Aufnahmevorrichtung (Pick-up) aufnimmt, durch eine Querförderschnekke (4) querverteilt wird und mittels einem Preßrotor (5) vorverdichtet wird. Der Preßrotor (5) preßt das Erntegut durch einen Zuführschacht (6) nach oben, wo es durch eine Einführöffnung (12) in einen rechtwinklig dazu angeordneten Preßkanal (7) gelangt. Durch den Querschnitt des Zufuhrschachtes (6) ergeben sich mattenartige Preßschichten (Pressgut) (8), die durch Preßhübe eines im Preßkanal (7) noch hinten (in Fahrtrichtung gesehen) drückbaren Preßkolbens (9) weiterverdichtet werden.

Eine Vielzahl dieser einzelnen Preßschichten (8) ergeben einen Ballen (10), der durch eine Bindevorrichtung (14), bestehend aus einer Bindernadel (14a) und Knüpfapparat (14b) umhüllt wird. Die einzelnen Preßschichten (8) werden von dem kontinuierlich zu geführten Erntegut am Ende des Zuführschachtes (6) durch eine an der Unterkante (9a) des Preßkolbens (9) angeordnete Schneideinrichtung (11) abgetrennt, in dem die Messerklingenartige Schneideinrichtung (11) durch einen Antrieb (13), hier ein Hydraulikzylinder, in den Zuführschacht (6) auf Höhe der Einführöffnung (12) gedrückt wird. Dabei eilt die Schneidvorrichtung (11), wie hier dargestellt, dem Preßkolben (9) etwa um eine halbe Schichtdicke voraus, um die obengenannten Vorteile wie sauberer Trennschnitt zu erreichen. Hierzu wird hier der Antriebszylinder (13) z.B. mittels einer Verzögerungsschaltung geringfügig vor dem Preßzylinder des Preßkolbens (9) mit Druck beaufschlagt, so daß die Schneideinrichtung (11) aus der ansonsten in Ruhestellung (also während des Einführens einer neuen Preßschicht (8)) flächenbündigen Anordnung zusammen mit Preßkolben (9) und Zuführschacht (6) zuerst austritt und gegenüber dem Preßkolben (9), je nach eingestellter Verzögerung, um etwa die halbe Schichtdicke vorauseilt.

In Fig. 2 ist der Bereich um die Einführöffnung (12) vergrößert mit einer zweiten Ausführung der Schneidbetätigung dargestellt. Der Preßkolben (9) ist an Führungen (18) an den Seitenwänden des Preßkanals (7) um jeweils etwa eine Preßschichtdicke (8) in den Preßkanal (7) hineinbewegbar. Hierbei wird er durch den Antriebszylinder (17), hier in Richtung nach rechts gedrückt und zwar über ein Gestänge (15). Mit dem knickhebelartigen Gestänge (15) ist sogleich die Schneideinrichtung (11), wie z.B. hier als gezahnte Messerklinge (11a) verbunden, so daß bei Betätigung des Antriebs (17) die Messerklinge aus ihrer flächenbündigen Ruhestellung nach rechts in Richtung der strichpunktierten Endstellung durch die zugeführte Erntegutschicht hindurch gedrückt wird. Hieraus ergibt sich die vorteilhafte Voreilung, da der Preßkolben (9) selbst noch nicht bewegt wird, sondern erst durch die Schneidvorrichtung (11) nach einer bestimmten Voreilstrecke mitgenommen wird. Dies erfolgt hier durch einen Anschlag (16) (z.B. einen Bolzen der starr im Preßkolben (9) gelagert ist) und beinach vorneschieben der Schneidvorrichtung (11) in einem Langloch (19) gleiten kann, bis er an das linke Ende des Langloches (19) anliegt und somit der Preßkolben (9) ebenfalls in den Preßkanal (7) bewegt wird.

Ebenso kann der Preßkolben (9) durch Anschlagflächen (16) mitgenommen werden. Die Voreilstrecke der Schneide läßt sich durch die Länge des Langlochs (19) verändern und entspricht hier etwa der halben Schichtdicke. In der Enstellung der Messerklinge (11a), entsprechend etwa der strichpunktierten Darstellung dient deren Oberseite als glattflächige Überschiebeplattform für die zugleich abgetrennte Preßschicht (8). (vgl. Pfeil) Beim Rückwärtshub des Antriebzylinders (17) wird der Preßkolben (9) an seinem unteren Ende durch Anlagewechsel des Anschlags (16) im Langloch (19) zurückgezogen und die Schneidvorrichtung (11) liegt wieder flächenbündig zwischen Zuführschacht (6) und Preßkolben (9).

In Fig. 3 ist ausschnittweise durch Ansicht auf den Preßkolben (9) und die in Fig. 1 und 2 linke obere Seite des Zuführschachtes (6) eine hin- und herbewegbare Schneidvorrichtung (11) dargestellt, die unterhalb der Kante (9a) besonders zähe Erntegüter durch sägeartige Bewegung trennt. Die Vorschubbewegung der Messerklinge (11) erfolgt dabei durch einen Antriebszylinder (13) gemäß Fig. 1. Die Messerklinge (11a) ist z.B. an Kugelführungen (20) abgestützt.

## Patentansprüche

1. Ballenpresse (1) für landwirtschaftliches Erntegut (2) mit einem der Vorverdichtung dienenden Zuführschacht (6) und einem hierzu zumindest annähernd rechtwinkligen Preßkanal (7), in dem ein Preßkolben (9) bewegbar ist, der an seiner dem Preßgut (8, 10) und dem Zuführschacht (6) zugewandten Kante eine Schneidvorrichtung (11) zum Abtrennen des zugeführten vorverdichteten Erntegutes (2) an der Einführöffnung des Preßkanals (7) aufweist, dadurch gekennzeichnet, daß die Schneidvorrichtung (11) während der Preßgutzuführung an der Einführöffnung (12) bündig mit dem Preßkolben (9) und dem Zuführschacht (6) abschließt und während dem Preßhub gegenüber dem Preßkolben (9) vorauseilend bewegbar ist.

2. Ballenpresse nach Anspruch 1, dadurch gekennzeichnet, daß die Schneidvorrichtung (11) durch einen gemeinsamen Antrieb (17) zusammen mit dem Preßkolben (9) über ein Gestänge (15) mit Anschlag (16) in dem Preßkanal (7) bewegbar ist.

3. Ballenpresse nach Anspruch 1, dadurch gekennzeichnet, daß die Schneidvorrichtung (11) unabhängig von dem Preßkolben (9) durch einen gesonderten Antrieb (13) voreilend in den Preßkanal (7) bewegbar ist.

4. Ballenpresse nach Anspruch 1, dadurch gekennzeichnet, daß die Schneidvorrichtung (11) quer zur Längsstreckung des Preßkanals (7) antreibbar ist.

## Claims

1. Baler press (1) for agricultural harvesting material (2) including a supply channel (6) serving for precompacting and a press channel (7) at least approximately perpendicular thereto in which a pressing piston (9) is movable provided with a cutting device (11) at its edge facing the pressed material (8, 10) and the supply channel (6) for separating the supplied precompacted harvesting material (2) at the introduction opening of the pressing channel (7)
characterized in that during supply of material to be pressed the cutting device (11) flushes at the introduction opening (12) with the pressing piston (9) and the supply channel (6) and during the pressing stroke is movable ahead in respect of the pressing piston (9).

2. Baler press of claim 1 characterized in that the cutting device (11) is movable in the press channel (7) by a common drive (17) together with the pressing piston (9) by a linkage (15) including a stop (16).

3. Baler press of claim 1 characterized in that the cutting device (11) is movable ahead in the press channel (7) independent from the pressing piston (9) by a separate drive (13).

4. Baler press of claim 1 characterized in that the cutting device (11) is drivable lateral to the longitudinal extension of the pressing channel (7).


**Revendications**

1. Ramasseuse-presse (1) pour la récolte de produits agricoles (2), possédant un puits d'amenée (6) servant à la précompression et un canal de pression (7) disposé au moins à peu près à angle droit par rapport à ce puits et dans lequel est mobile un piston presseur (9) présentant, sur son côté dirigé vers le produit comprimé (8, 10) et vers le puits d'amenée (6), un dispositif de coupe (11) pour sectionner le produit (2) précomprimé amené à l'ouverture d'introduction du canal de pression (7), caractérisé en ce que le dispositif de coupe (11) est aligné avec le piston presseur (9) et le puits d'amenée (6), au droit de l'ouverture d'introduction (11), pendant l'amenée du produit récolté, et peut être déplacé avec de l'avance par rapport au piston presseur (9) pendant la course de compression.

2. Ramasseuse-presse selon la revendication 1, caractérisée en ce que le dispositif de coupe (11) est déplaçable dans le canal de pression (7), par l'intermédiaire d'un système à barres articulées (15) présentant une butée (16), au moyen d'une commande (17) commune agissant également sur le piston presseur (9).

3. Ramasseuse-presse selon la revendication 1, caractérisée en ce que le dispositif de coupe (11) peut être déplacé dans le canal de pression (7), avec de l'avance, au moyen d'une commande séparée (13), indépendamment du piston presseur (9).

4. Ramasseuse-presse selon la revendication 1, caractérisée en ce que le dispositif de coupe (11) peut être entraîné transversalement à l'étendue longitudinale du canal de pression (7).

FIG. 1

FIG. 2

FIG. 3